# EUROPÄISCHE PATENTSCHRIFT

(11) **EP 0 686 801 B1**
(45) Veröffentlichungstag und Bekanntmachung des Hinweises auf die Patenterteilung: **25.03.1998**
(21) Anmeldenummer: 95108106.6
(22) Anmeldetag: 27.05.1995
(51) Int. Cl.: F16L 37/34

(54) **Schnellkupplung für unter Druck stehende Fluide**
Quick acting coupling for pressurized fluids
Raccord rapide pour fluides sous pression

(30) Priorität: 10.06.1994 IT MI941218
(43) Veröffentlichungstag der Anmeldung: 13.12.1995
(73) Patentinhaber: FASTER S.r.l., I-20066 Melzo Milano (IT)
(72) Erfinder: Arosio, Massimo, I-26027 Rivolta d'Adda (IT)
(74) Vertreter: Mayer, Hans Benno, Dipl.-Ing.

(56) Entgegenhaltungen:
- WO-A-93/13348
- DE-A- 4 101 001
- DE-A- 4 114 480

## Beschreibung

Gegenstand der vorliegenden Erfindung ist eine Schnellkupplung zum Anschließen von Rohrleitungen, die ein unter Druck stehendes Fluid enthalten.

Es sind vom Stand der Technik Schnellkupplungen bekannt, die von einem buchsenförmigen Element gebildet sind, in welches ein steckerförmiges Element eingesetzt werden kann. Aufgrund der erhöhten Drücke, die auch Werte um 100 bar erreichen können und die in den anzuschließenden Rohrleitungen vorhanden sind, konnte man in der Vergangenheit feststellen, daß während des Anschlußvorganges der Schnellkupplungen, die im Inneren der Kupplungen vorgesehenen Dichtungsringe direkt durch das hydraulische Fluid, das sich unter erhöhtem Druck befindet, während des Kopplungsvorganges beeinflußt werden. Dadurch wird der Dichtungsring insbesondere des steckerförmigen Kupplungsteiles durch eine sehr heftige Ölströmung beeinflußt. Daraus folgt, daß sich die Dichtung abnutzt und beschädigt wird und somit Ölverluste nach erfolgtem Zusammenfügen der Kupplungsteile auftreten.

Aus WO-A-9313348 ist bereits eine Schnellkupplung bekannt geworden, die aus einem Bauteil besteht, das eine buchsenförmige Ausnehmung aufweist, in welche ein steckerförmiger Vorsprung eines zweiten Kupplungsteiles eingesetzt werden kann.

Das steckerförmige Bauteil ist hülsenartig ausgebildet und auf der Innenseite der Hülse ist eine Ringdichtung angeordnet, die bei Einführen des steckerförmigen Bauteiles in die buchsenförmige Ausnehmung an der Aussenwand eines rohrförmig ausgebildeten Führungsteiles anliegt.

Der steckerförmige Vorsprung ist einstückig ausgebildet und weist an seinem inneren Umfang eine Nute auf, in die der Dichtungsring eingesetzt ist.

Bei Zusammenfügen der beiden Bauteile dieser bekannten Schnellkupplung, erfolgt beim Durchfluss von Fluiden, die unter hohem Druck stehen, ein unerwünschtes Verdrängen und Austreten der Ringdichtung aus der Umfangsnut. Dies führt zu Leckverlusten.

Die bekannte Schnellkupplung weist im Inneren auch ein Auflageteil auf, das gegen die Wirkung einer Schraubenfeder verschiebbar ist.

Dieses Auflageteil ist nicht geeignet, eine Abdichtfunktion zu erfüllen, was ebenso zu Leckverlusten in der bekannten Schnellkupplung führt.

Aufgabe der vorliegenden Erfindung ist es, diese Nachteile zu vermeiden und eine neue Schnellkupplung vorzuschlagen, die sicher zusammengesteckt bzw. auseinandergenommen werden kann, auch wenn im Inneren der Anschlussteile ein unter erhöhtem Druck stehendes Fluid vorhanden ist. Desweiteren sollen unerwünschte Beschädigungen der im Inneren der Schnellkupplung vorgesehenen Dichtung sicher vermieden werden, und es sollen unerwünschte Leckverluste vermieden werden.

Erfindungsgemäß wird diese Aufgabe gelöst durch die Verwendung einer buchsenförmigen Schnellkupplung, die einen Fluideingang und einen Fluidausgang aufweist und im Inneren einen unbeweglichen Sperrzapfen aufnimmt, der mit verschiebbaren Rohrelementen gegen die Wirkung von Federmitteln zusammenwirkt, wobei in das buchsenförmige Bauteil ein steckerförmiges Kupplungsteil einführbar ist, das mit einem zylindrischen, steckerartigen Vorsprung versehen ist sowie mit einer Öffnung zum Auslaß des unter Druck stehenden Fluids, und im Inneren Dichtungsmittel aufweist, und das Kupplungsteil im Inneren des steckerförmigen Elements ein verschiebbares Rohrelement aufnimmt, das an der Vorderseite einen geschlossenen Boden aufweist, gegen den eine Feder anliegt, die von einer ortsfesten Stütze getragen wird, und das Rohrelement einen äußeren Umfangswulst aufweist, der in Ruhestellung gegen einen ringförmigen Absatz anliegt, der im Inneren des zylindrischen Vorsprunges vorgesehen ist, und dadurch gekennzeichnet ist, daß an dem Rohrelement unter Zwischenschaltung eines Dichtungsringes ein Absperrkörper verschiebbar gelagert ist, der mit einer Dichtungsfläche versehen ist, die über ein Federmittel gegen eine Absperrkante angedrückt wird, welche am inneren Umfang des zylindrischen Vorsprungs vorgesehen ist, und der Absperrkörper in Fortsetzung der Sperrfläche Öffnungen für den Durchfluß des unter Druck stehenden Fluids aufweist. Mit einer, nach der Erfindung ausgebildeten Schnellkupplung wird es möglich, den vorspringenden Teil der steckerförmigen Kupplung in den buchsenförmigen Teil der Kupplung einzuführen, wobei dieses Zusammenfügen mit wenig Aufwand erfolgen kann. Die Dichtungsringe des steckerförmigen Kupplungsteiles werden während des Kupplungsvorganges bzw. während des Entkupplungsvorganges nicht vom Druck des Fluids beeinflußt, und die Strömung des unter Druck stehenden Fluids findet nur dann statt, wenn die Dichtung(en) vollständig abgeschirmt sind.

Der Gegenstand der vorliegenden Erfindung wird nun im einzelnen anhand eines Ausführungsbeispieles beschrieben und in den beigefügten Zeichnungen dargestellt. Es zeigen:
Fig. 1 die zwei Komponenten der Schnellkupplung in geschlossener und nicht zusammengesetzter Stellung;
Fig. 2 den Beginn des Zusammensetzvorganges zwischen den zwei Bauteilen der Schnellkupplung;
Fig. 3 eine weitere Darstellung der Bauteile der Schnellkupplung während des Zusammensetzvorganges;
Fig. 4 die Bauteile der Schnellkupplung nach erfolgtem Zusammenbau und Durchfluß des unter Druck stehenden Fluids;
Fig. 5 im vergrößerten Maßstab ein Detail des Absperrmittels, das im Inneren der steckerförmigen Kupplung vorgesehen ist.

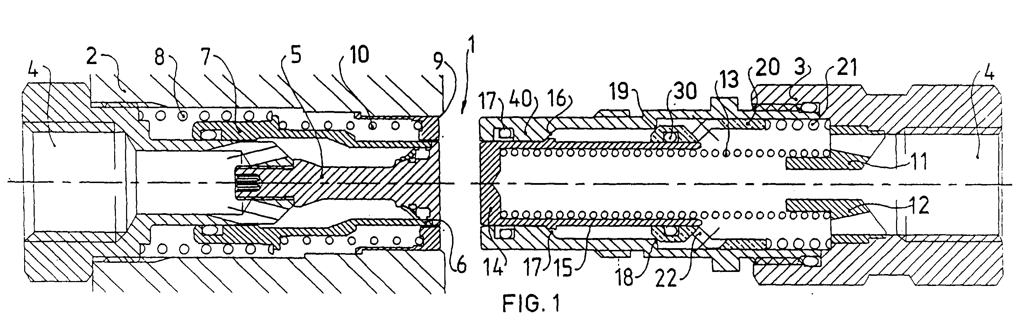

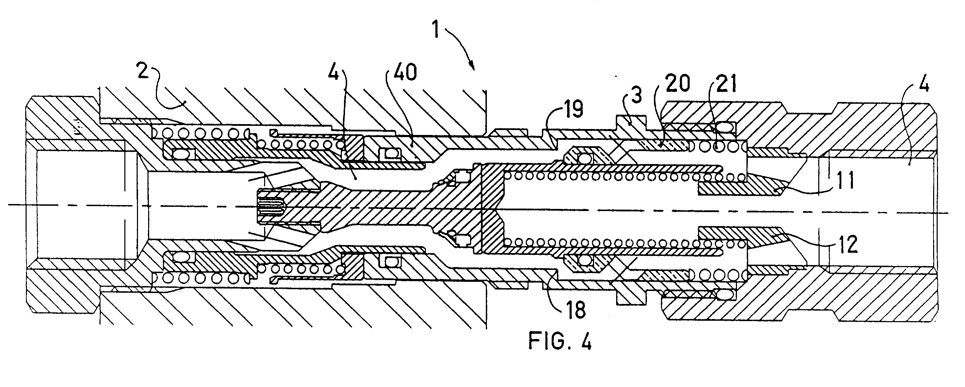

Wie man deutlich aus den Figuren 1 bis 4 entnehmen kann, besteht die Schnellkupplung, allgemein mit 1 gekennzeichnet, aus einem buchsenförmigen Element 2 und einem steckerförmigen Kupplungsteil 3.

Das Element 2 weist in bekannter Weise eine Axialbohrung 4 für den Durchfluß des unter Druck stehenden Fluids auf. In bekannter Weise ist ein ortsfester, im Inneren der Axialbohrung 4 angeordneter Zapfen 5 vorgesehen, der einen Sperrsitz 6 aufweist, welcher mit einem rohrförmigen Absperrkörper 7 zusammenwirkt. Dieser ist gegen die Wirkung einer Feder 8 verschiebbar und wirkt mit einer ringförmigen Hutmutter 9 zusammen, welche von einer Feder 10 beaufschlagt wird, welche an einem Anschlag anliegt, der am Außenumfang des rohrförmigen Körpers 7 gebildet ist. Das buchsenförmige Element 2 ist vom Stand der Technik bekannt. Die Kupplung 3, in Form eines Steckers, weist eine Axialbohrung 4 für den Durchfluß des unter Druck stehenden Fluids auf. Im Inneren der Bohrung 4 ist eine ortsfeste Stütze 11 vorgesehen, die mit Durchgangsöffnungen 12 für das Fluid versehen ist. An der Stütze 11 liegt eine Schraubenfeder 13 an, die auf den geschlossenen Boden 14 eines Rohrelementes 15 einwirkt, das an seinem Außenumfang einen ringförmigen Vorsprung 16 aufweist, mit dem es gegen einen Anschlag 17 anliegt, der in das Innere des steckerförmigen Körpers 40 ragt. Im Inneren des Körpers 40 und an dessen Vorderseite, ist ein Dichtungsmittel 17 in Form einer Ringdichtung vorgesehen. Weiterhin ist im Inneren des steckerförmigen Körpers 40 ein Absatz 18 ausgebildet, der eine ringförmige Absperrkante bildet. An dieser Absperrkante 18 liegt eine ringförmige Absperrfläche 19 an, die Teil des Ventilkörpers 20 ist, der beispielsweise Tassenform aufweist und von einer Feder 21 beaufschlagt wird, die an der feststehenden Stütze 11 anliegt.

Zwischen der Absperrfläche 19 und dem von der Feder 21 beanspruchten Ende des tassenförmigen Körpers 20 sind Radialöffnungen 22 für den Durchfluß des Fluids vorgesehen. Das rohrförmige Teil 15, das von der Feder 13 beaufschlagt wird, wird bei nicht aktiver Stellung der Kupplung 3 mit dem abstehenden Ringkörper 16 gegen den Anschlag 17 gedrückt, um in dieser Stellung den Dichtungsring 17 abzuschirmen und zu schützen. Gleichzeitig wirkt die Feder 21 auf den tassenförmigen Körper 20 ein und drückt dessen Sperrfläche 19 gegen die Sperrkante 18 des steckerförmigen Körpers 40.

Deshalb, dank der Anordnung eines Dichtungsringes 30, der zwischen dem tassenförmigen Ventilkörper 20 und dem Rohrelement 15 vorgesehen ist, ist ein Durchfluß eines unter Druck stehenden Fluids nicht möglich.

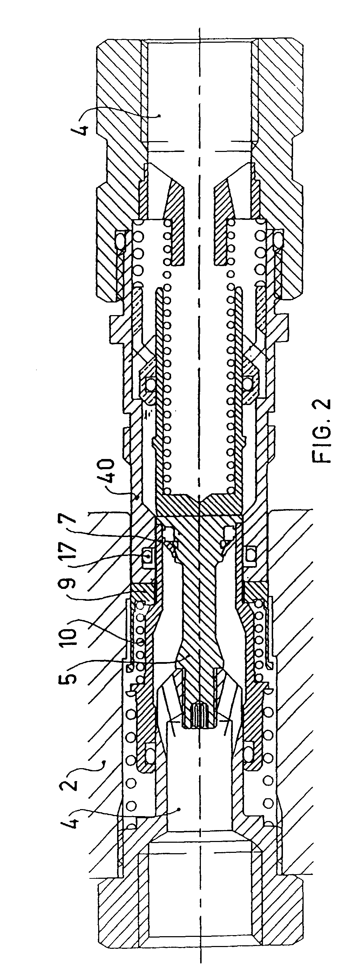

Durch das Einführen des steckerförmigen Körpers 40 des Kupplungsteiles 3 in die Axialbohrung 4 des Kupplungsteiles 2, wie in Fig. 2 dargestellt, erreicht man, daß der Boden 14 des Rohrelementes 15 an dem Zapfen 5 anliegt und der steckerförmige Körper 40 in die Axialbohrung 4 der Kupplung 2 eindringt, um anschließend die Hutmutter 9 gegen die Wirkung der Feder 10, welche zusammengedrückt wird, zu verschieben.

Der Dichtungsring 17 ist noch durch das Rohrelement 7 abgedeckt und abgeschirmt, und ein Durchfluß des Fluids durch die Bohrungen 4 ist noch nicht möglich.

Durch weiteres Einführen des Zapfens 40 in die Bohrung 4 der Kupplung 2 erreicht man, daß durch die Feder 10 eine Verschiebung des Rohrkörpers 7 erfolgt, wobei der Absperrsitz 6 des Zapfens 5 freigelegt wird.

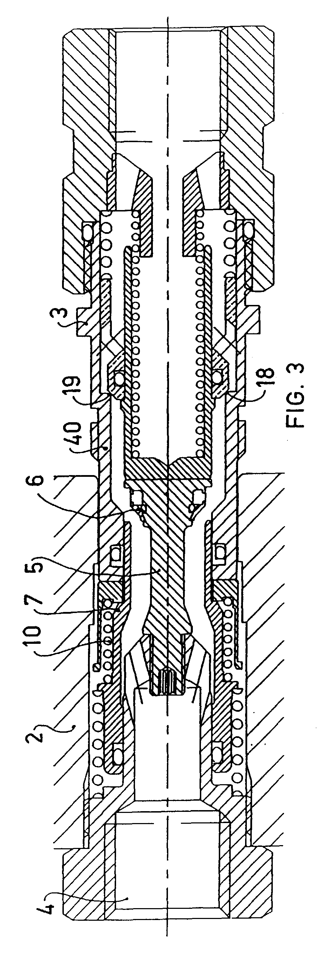

Wie man der Fig. 3 entnehmen kann, liegt in dieser Stellung die ringförmige Absperrfläche 19 immer noch an der Sperrkante 18 an, die im Inneren des zapfenförmigen Körpers 40 in der Kupplung 3 gebildet ist.

Durch weiteres Einführen des Kupplungsteiles 3 in die Bohrung 4 des Kupplungsteiles 2 erreicht man auch eine Axialverschiebung des tassenförmigen Körpers 20 gegen die Wirkung der Feder 21, wobei die ringförmige Absperrfläche 19 von der Absperrkante 18 getrennt wird. Lediglich jetzt wird ein Durchfluß des unter Druck stehenden Fluids längs des Kanals 4, das heißt zwischen der Kupplung 2 und der Kupplung 3 oder umgekehrt, erlaubt.

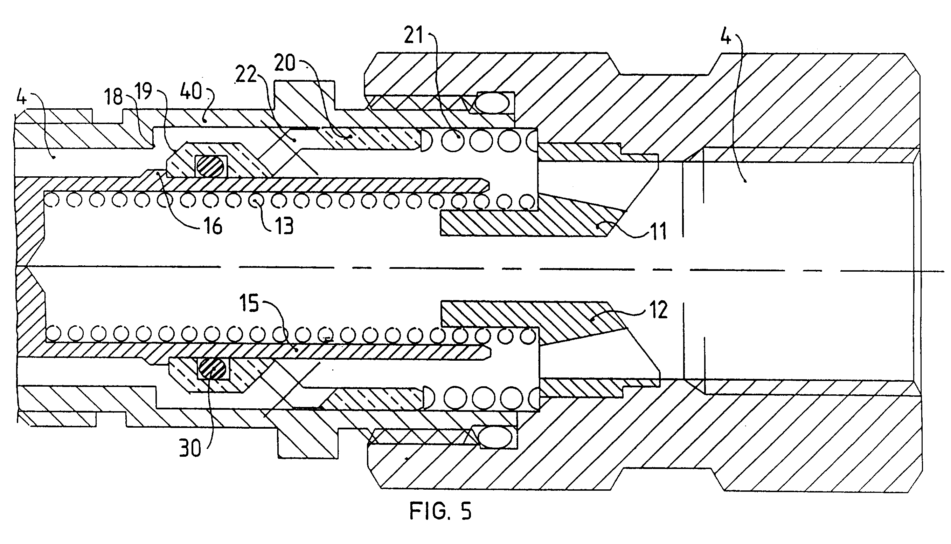

Die Lage der Bauteile, die den freien Fluß im Inneren der Kupplung 1 erlauben, ist noch einmal in vergrößertem Maßstab in Fig. 5 gezeigt. Wie man erkennen kann, wird der tassenförmige Körper 20 mit Hilfe des ringförmigen Vorsprungs 16 rückwärts und gegen die Wirkung der Feder 21 verschoben. Somit wird die ringförmige Absperrfläche 19 des Körpers 20 von der Sperrkante 18 getrennt, was auf diese Weise, und lediglich am Ende der Montagephase der Kupplungsteile 2 und 3 einen ungestörten Durchfluß des unter Druck stehenden Fluids durch die Radialbohrungen 22 des Elementes 20 erlaubt.

## Patentansprüche

1. Schnellkupplung (1) für unter Druck stehende Fluide, die eine buchsenförmige Schnellkupplung (2) umfaßt, welche einen Fluideingang und einen Fluidausgang (4) aufweist und im Inneren einen unbeweglichen Sperrzapfen (5) aufnimmt, der mit verschiebbaren Rohrelementen (7, 9) gegen die Wirkung von Federmitteln (8, 10) zusammenwirkt, und im buchsenförmigen Teil (2) eine steckerförmige Kupplung (3) einführbar ist, die mit einem zylindrischen Vorsprung (40) versehen ist und eine Öffnung (4) zum Auslaß des unter Druck stehenden Fluids sowie im Inneren Dichtungsmittel (17) aufweist, wobei im Inneren des steckerförmigen Elementes (3) ein verschiebbares Rohrelement (15) aufgenommen ist, das auf der Vorderseite einen geschlossenen Boden (14) aufweist, an dem eine Feder (13) anliegt, die von einer ortsfesten Stütze (11) getragen wird, und das Rohrelement (15) einen äußeren Umfangswulst (16) aufweist, der in Ruhestellung gegen einen ringförmigen Absatz (17) anliegt, der im Inneren des zylindrischen Vorsprungs (40) vorgesehen ist, **dadurch gekennzeichnet**, daß an dem Rohrelement (15) unter Zwischenschaltung eines Dichtungsringes (30) ein Absperrkörper (20) verschiebbar gelagert ist, der mit einer Absperrfläche (19) versehen ist, die durch ein Federmittel (21) gegen eine Absperrkante (18) gedrückt wird, die an dem inneren Umfang des zylindrischen Vorsprungs (40) vorgesehen ist, und daß der Absperrkörper (20) in Fortsetzung der Absperrfläche (19) Öffnungen (22) für den Durchfluß des unter Druck stehenden Fluids aufweist.

2. Schnellkupplung, für unter Druck stehende Fluide, nach Anspruch 1, **dadurch gekennzeichnet**, daß die Stütze (11) in ortsfester Lage im Inneren der Bohrung (4) der Kupplung (3) vorgesehen ist und Durchflußöffnungen (12) für das Fluid aufweist.

3. Schnellkupplung, für unter Druck stehende Fluide, nach Anspruch 1, **dadurch gekennzeichnet,** daß der Ventilkörper (20) auf der zum Rohrelement (15) gerichteten Seite einen Dichtungsring (30) aufnimmt.

## Claims

1. Quick-acting coupling (1) for pressurized fluids, which comprises a socket-shaped quick-acting coupling (2), which has a fluid inlet and a fluid outlet (4) and receives in the interior an immovable shut-off plug (5), which interacts with displaceable pipe elements (7, 9) against the action of spring means (8, 10), and in the socket-shaped part (2) there can be introduced a plug-shaped coupling (3), which is provided with a cylindrical projection (40) and has an opening (4) for letting out the pressurized fluid and, in the interior, sealing means (17), there being received in the interior of the plug-shaped element (3) a displaceable pipe element (15), which has on the front side a closed base (14), against which there bears a spring (13), which is borne by a fixed support (11), and the pipe element (15) has an outer circumferential bead (16), which in the position of rest bears against an annular shoulder (17), which is provided in the interior of the cylindrical projection (40), characterized in that on the pipe element (15) there is displaceably mounted, with a sealing ring (30) interposed, a shut-off body (20), which is provided with a shut-off face (19), which is pressed by a spring means (21) against a shut-off edge (18), which is provided on the inner circumference of the cylindrical projection (40), and in that the shut-off body (20) has in continuation of the shut-off face (19) openings (22) for the through-flow of the pressurized fluid.

2. Quick-acting coupling for pressurized fluids according to Claim 1, characterized in that the support (11) is provided in a fixed position in the interior of the bore (4) of the coupling (3) and has through-flow openings (12) for the fluid.

3. Quick-acting coupling for pressurized fluids according to Claim 1, characterized in that the valve body (20) receives on the side directed towards the pipe element (15) a sealing ring (30).

## Revendications

1. Raccord rapide (1) pour des fluides sous pression qui comporte un raccord rapide (2) en forme de douille qui comporte une entrée de fluide et une sortie de fluide (4) et qui reçoit à i'intérieur un boulon de blocage immobile (5) qui coopère avec des éléments tubulaires déplaçables (7, 9) contre l'action de moyens à ressort (8, 10), et où peut être inséré dans la partie en forme de douille (2) un raccord en forme de fiche (3) qui est pourvu d'une saillie cylindrique (40) et qui présente une ouverture (4) pour l'évacuation du fluide sous pression ainsi qu'à l'intérieur des moyens d'étanchéité (17), à l'intérieur de l'élément en forme de fiche (3) étant reçu un élément tubulaire déplaçable (15) qui présente sur le côté avant un fond fermé (14) auquel s'applique un ressort (13) qui est porté par un support fixe (11) et où l'élément tubulaire (15) présente un bourrelet périphérique extérieur (16) qui, en position de repos, s'applique contre un gradin annulaire (17) qui est prévu à l'intérieur de la saillie cylindrique (40), caractérisé en ce qu'il est logé de manière déplaçable à l'élément tubulaire (15), après avoir intercalé une bague d'étanchéité (30), un corps de blocage (20) pourvu d'une surface de blocage (19) qui est poussée par un moyen à ressort (21) contre une arête de biocage (18) qui est prévue au pourtour intérieur de la saillie cylindrique (40) et en ce que le corps de blocage (20), dans le prolongement de la surface de blocage (19), présente des ouvertures (22) pour le passage du fluide sous pression.

2. Raccord rapide pour des fluides sous pression selon la revendication 1, caractérisé en ce que le support (11) est prévu en position fixe à l'intérieur du perçage (4) du raccord (3) et présente des ouvertures de passage (12) pour le fluide.

3. Raccord rapide pour des fluides sous pression selon la revendication 1, caractérisé en ce que le corps de vanne (20), au côté orienté vers l'élément tubulaire (15), reçoit une bague d'étanchéité (30).
